# EUROPEAN PATENT APPLICATION

(11) **EP 1 748 645 A2**
(43) Date of publication of application: **31.01.2007**
(21) Application number: 06117077.5
(22) Date of filing: 12.07.2006
(51) Int. Cl.: H04N 5/44

(54) **Broadcast receiver and method of interface thereof**

(30) Priority: 22.07.2005 KR 20050066994
(71) Applicant: LG Electronics Inc., Yongdungpo-gu Seoul (KR)
(72) Inventor: Cha, Sang Hoon, Seoul 120-830 (KR)
(74) Representative: Vetter, Ewald Otto

(57) **Abstract**

A broadcast receiver and method of an interface thereof are disclosed, by which data transmission is efficiently achieved between a host and a cable card through an extended channel. The present invention includes a cable card transmitting an operational mode and a host receiving and setting the operational mode from the cable card, the host establishing an extended channel communication flow according to a data type to communicate with the set operational mode, the host exchanging corresponding data with the cable card via the established flow.

## Description

This application claims the benefit of the Korean Patent Application No. 10-2005-0066994, filed on July 22, 2005, which is hereby incorporated by reference as if fully set forth herein.

### BACKGROUND OF THE INVENTION

### Field of the Invention

The present invention relates to a broadcast receiver, and more particularly, method of an interface thereof. Although the present invention is suitable for a wide scope of applications, it is particularly suitable for an interface between a host and a cable card.

### Discussion of the Related Art

Generally, a cable broadcast system mainly consists of a cable broadcasting station as a transmitting side that transmits cable broadcasts and a cable broadcast receiver receiving the transmitted cable broadcasts.

In particular, the cable broadcasting station is called a system operator (hereinafter abbreviated SO) headend or a multiple system operator (hereinafter abbreviated MSO) headend.

The cable broadcast receiver adopts an open cable type that a cable card including a conditional access (hereinafter abbreviated CA) system is separated from a body.

In particular, the cable card may be called a POD (point of deployment) module and is configured to be detachably assembled to a body slot of the cable broadcast receiver.

And, the body, in which the cable card is inserted, is called a host.

Moreover, the cable card and the host configure the cable broadcast receiver in general.

A data channel and an extended channel exist between the cable card and the host.

The data channel is configured to exchange control signals between the host and the cable card. And, the extended channel is configured to exchange real data.

Namely, the cable card interprets an order given by the headend through communications with the headend. The able card performs an item instructed by the headend while communicating with the host through the data and extended channels. And, the cable card delivers contents inputted by a user to the headend.

### SUMMARY OF THE INVENTION

Accordingly, the present invention is directed to a broadcast receiver and method of an interface thereof that substantially obviate one or more problems due to limitations and disadvantages of the related art.

An object of the present invention is to provide a broadcast receiver and method of an interface thereof, by which data transmission is efficiently achieved between a host and a cable card through an extended channel.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a broadcast receiver according to the present invention includes a cable card transmitting an operational mode and a host receiving and setting the operational mode from the cable card, the host establishing an extended channel communication flow according to a data type to communicate with the set operational mode, the host exchanging corresponding data with the cable card via the established flow.

Preferably, the cable card transmits the operational mode decided through communications with a headed to the host.

Preferably, the operational mode includes either an OOB mode using an OOB modem or a DSG associated mode using a DOCSIS modem.

In another aspect of the present invention, an interfacing method includes a step (a) of setting an operational mode received from a cable card in a host, a step (b) of establishing an extended channel communication flow according to a data type to communicate with the set operational mode, and a step (c) of exchanging corresponding data between the cable card and the host via the established flow.

In another aspect of the present invention, an interfacing method includes a step (a) of setting an operational mode received from a cable card in a host, a step (b) of if the set operational mode is a DSG associated mode using a DOCSIS modem, establishing a DSG flow, a step (c) of if the DSG flow is established, establishing at least one selected from the group consisting of an MPEG section flow, an IP unicast flow and an IP multicast flow, and a step (d) of exchanging corresponding data between the cable card and the host via the established flow.

In another aspect of the present invention, an interfacing method includes a step (a) of setting an operational mode received from a cable card in a host, a step (b) of if the set operational mode is an OOB mode using an OOB modem, establishing an MPEG section flow, and a step (d) of exchanging corresponding data between the cable card and the host via the established MPEG section flow.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a block diagram of a cable broadcast receiver according to the present invention;

FIG. 2 is a flowchart of setting an operational mode and a flow according to one embodiment of the present invention; and

FIG. 3 is a flowchart of a method of setting the operational mode and the flow shown in FIG. 2.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

General terminologies used currently and globally are selected as terminologies used in the present invention. And, there are terminologies arbitrarily selected by the applicant for special cases, for which detailed meanings are explained in detail in the description of the preferred embodiments of the present invention. Hence, the present invention should be understood not with the names of the terminologies but with the meanings of the terminologies.

As one embodiment of the present invention, a broadcast receiver, which includes OOB QPSK modem and DOCSIS (data over cable service interface specifications) modem and supports DSG (DOCSIS settop gateway), is explained in the following description.

The present invention establishes a data communication path (i.e., extended channel communication flow) between a cable card and a host by selecting one of the OOB QPSK and DOCSIS modems to perform bi-directional or unidirectional communications between a headend, cable card and host via the established data communication path.

For the convenience of explanation for the present invention, an operational mode in case of establishing a data communication path based on an OOP QPSK modem is defined as an OOB mode. And, an operational mode in case of establishing a data communication path based on a DOCSIS modem is defined as a DSG (DOCSIS settop gateway) associated mode.

Whether to use the OOB QPSK modem or the DOCSIS modem (with DSG) for the communications between the host, cable card and headend is decided by the operational mode. In particular, once the operational mode is decided, operations of various associated protocols for communications on a cable network are decided. So, the operational mode should be decided quickly as soon as possible.

For this, in the present invention, an operational mode is preferentially set and an extended channel communication flow is the established according to the set operational mode.

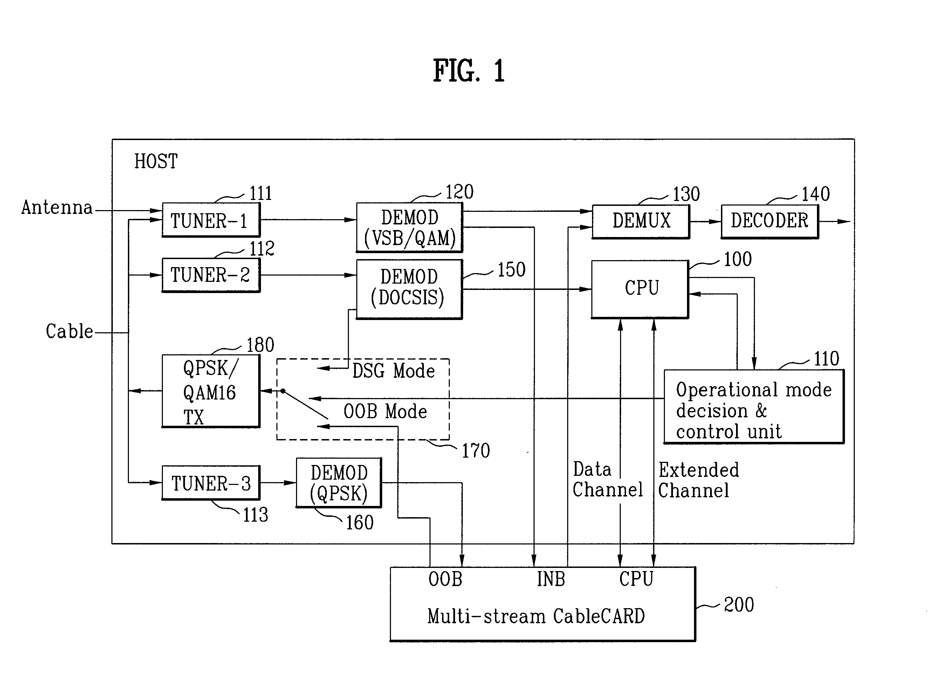

FIG. 1 is a block diagram of a cable broadcast receiver according to the present invention.

Referring to FIG. 1, a cable broadcast receiver according to the present invention includes a host and a cable card 200.

The host includes a central processing unit (CPU) 100, an operational mode control unit 110, first to third tuners 111 to 113, first to third demodulating unit 120, 150 and 160, a demultiplexing unit 130, a decoder 140, a switching unit 170 and a modulating unit 180.

The cable card 200 may include a single stream card capable of processing one stream only or a multi-stream card capable of processing a plurality of streams simultaneously.

The first tuner 111 tunes a specific channel frequency of terrestrial A/V (audio/video) broadcasting transmitted via an antenna or cable A/V broadcasting transmitted by in-band via a cable only and then outputs the tuned frequency to the first demodulating unit 120.

In this case, since the terrestrial broadcasting and the cable broadcasting differ from each other in a transmission system, a demodulation scheme of the first demodulating unit 120 for the terrestrial broadcasting is different from that for the cable broadcasting. In particular, the terrestrial A/V broadcast is modulated by VSB (vestigial sideband) modulation and the modulated broadcast is then transmitted. On the other hand, the cable A/V broadcast is modulated by QAM (quadrature amplitude modulation) and the modulated broadcast is then transmitted.

So, if a channel frequency tuned by the first tuner 111 corresponds to the terrestrial broadcast, it is demodulated according to VSB by the first demodulating unit 120. If a channel frequency tuned by the first tuner 111 corresponds to the cable broadcast, it is demodulated according to QAM by the first demodulating unit 120.

If a signal demodulated by the first demodulating unit 120 corresponds to the terrestrial broadcast, the demodulated signal is outputted to the demultiplexing unit 130. If a signal demodulated by the first demodulating unit 120 corresponds to the cable broadcast, the demodulated signal is outputted to the demultiplexing unit 130 via the cable card 200 loaded in a slot.

The cable card 200 includes a conditional access (CA) system for copy prevention and conditional access of high-value-added broadcast contents.

In particular, if the cable A/V broadcast is scrambled, the cable card 200 descrambles the cable A/V broadcast and then outputs the descrambled signal to the demultiplexing unit 130. If the cable card 200 is not loaded, the cable A/V broadcast demodulated by the first demodulating unit 120 is directly outputted to the demultiplexing unit 130. In this case, since it is unable to descramble the scrambled cable A/V broadcast, a user is unable to view the corresponding broadcast normally.

The demultiplexing unit 130 separates the multiplexed and transmitted video and audio signals and then outputs the separated signals to the decoder 140.

The decoder 140 recovers the compressed audio and video signals into original audio and video signals through video decoding algorithm and audio decoding algorithm, respectively and then outputs the recovered signals to display.

Meanwhile, the second tuner 112 tunes a specific channel frequency of data broadcasting transmitted via a cable by DSG and then outputs the tuned frequency to the second demodulating unit 150. The second demodulating unit 150 demodulates the DSG data broadcast and then outputs the demodulated data broadcast to the CPU 100.

And, the third tuner 113 tunes a specific channel frequency of data broadcasting transmitted via a cable by OOB and then outputs the tuned frequency to the third demodulating unit 160. The third demodulating unit 160 demodulates the OOB data broadcast and then outputs the demodulated data broadcast to the cable card 200.

For instance, since the QPSK transmission system is used in case of the OOB, a receiving side performs demodulation by QPSK.

In Case that bi-directional communications are possible between the cable broadcasting station and the cable broadcast receiver, information (e.g., payable program request, receiver status information, user input, etc.) transmitted to the cable broadcasting station from the cable broadcast receiver is transmitted according to the OOB or DSG. For this, the switching unit 170 is provided. A switching operation of the switching unit 170 is controller by the operational mode control unit 110. Optionally, the operational mode control unit 110 can be built in the CPU 100.

In case of an OOB mode, a user input or receiver status information is outputted to the modulating unit 180 via the cable card 200 and the switching unit 170, modulated by the modulating unit 180 according to QPSK modulation, and then transmitted to the cable broadcasting station via a cable, under the control of the operational mode control unit 110.

In case of a DSG mode, a user input or receiver status information is outputted to the modulating unit 180 via the CPU 100 and the switching unit 170, modulated by the modulating unit 180 according to QAM-16 modulation, and then transmitted to the cable broadcasting station via a cable, under the control of the operational mode control unit 110.

An operational mode setup of the host is achieved by communications between the CPU 100 of the host and a CPU of the cable card 200.

In particular, the cable card communicates with the headend via the cable network to primarily decide whether to use the OOB mode or the DSG mode as the operational mode.

Subsequently, the cable card communicates with the host to finally decide the operational mode.

As mentioned in the foregoing description, there is the data channel or the extended channel as a channel for the communications between the host and the cable card.

The extended channel is a CPU interface defined to enable data to be exchanged between the host and the cable card.

A data type or a service type transmitted via the extended channel includes MPEG section, IP unicast, IP multicast or DSG so far.

A transmission path corresponding to the data type should be preferentially established between the cable card and the host to transmit data via the extended channel. This is called a flow.

For instance, in order to transmit MPEG section data, an MPEG section flow is established between the cable card and the host and the MPEG section data can be then substantially transmitted.

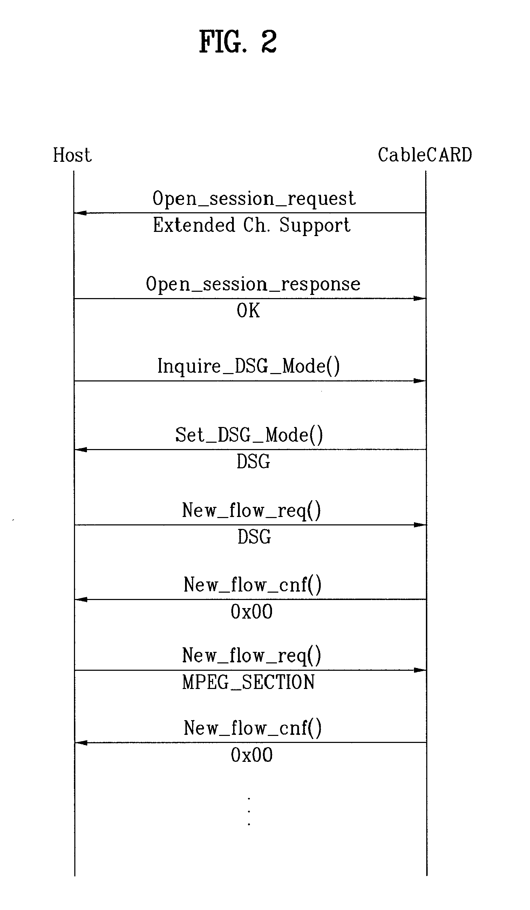

FIG. 2 is a flowchart of setting an operational mode and a flow according to one embodiment of the present invention, in which a DSG operational mode is set.

Referring to FIG. 2, in case of attempting to set up a communication path between a cable card and a host, an ESC (extended channel support) resource is opened. This activity is achieved in a manner that the cable card makes a request (open_session_request) for a session open for the ESC resource to the host and that the host then makes an OK response (open_session_response).

Subsequently, the host transmits inquire_DSG_mode() APDU to the cable card to inquire the cable card what is a current operational mode (preferred operational mode).

If so, the cable card makes a response in a manner of transmitting Set_DSG_mode() APDU containing information for an OOB or DSG associated mode. In particular, the cable card selects one of OOB, DSG, DSG_one-way, Advanced_DSG_mode and Advanced_DSG_one-way_mode as a factor of Set_DSG_mode() APDU and then transmits the selected factor to the host. If so, the host is able to set the operational mode.

Hence, whether to use an OOB QPSK modem or whether to use a DOCSIS modem as DSG is decided at t timing point that the host receives the transmitted Set_DSG_mode () APDU. In this case, the host is able to directly set the operational mode by receiving Set_DSG_mode () APDU from the cable card without a process of transmitting inquire_DSG_mode() APDU to the host.

For example, the cable card selects the operational mode decided through the communications with the headed and then transmits the selected operational mode to the host.

In FIG. 2, an example of transmitting a DSG mode to the host is shown.

Once the operational mode, as shown in FIG. 2, is decided as FIG. 2, the host transmits new_flow_req(DSG) APDU to the cable card. The cable card responds with new_flow_cnf(DSG, 0x00) APDU to set up a DSG flow.

After the DSG flow has been set up, the cable card sets up an MPEG section flow, an IP unicast flow, an IP multicast flow and the like using the DOSIC modem as DSG and is then able to transmit or receive corresponding data via each of the set flows.

In FIG. 2, an example of APDU exchange for a setup of an MPEG section flow after a setup of a DSG flow is shown.

In particular, after the DSG flow has been set up, the host transmits new_flow_req(MPEG_SECTION) APDU to the cable card. If so, the cable card sets up the MPEG section flow by responding with new_flow_cnf(MPEG_SECTION, 0x00) APDU. The cable card is then able to transmit or receive MPEG section data via the set MPEG section flow. Namely, after the MPEG section flow has been set up, the cable card immediately transmits the MPEG section data to the host. For instance, the cable card transmits SI section tables of MPEG section PID 0x1FFC to the host via the MPEG section flow. If so, the host configures an SI channel map by receiving the SI section tables and is then able to perform a cable channel navigation.

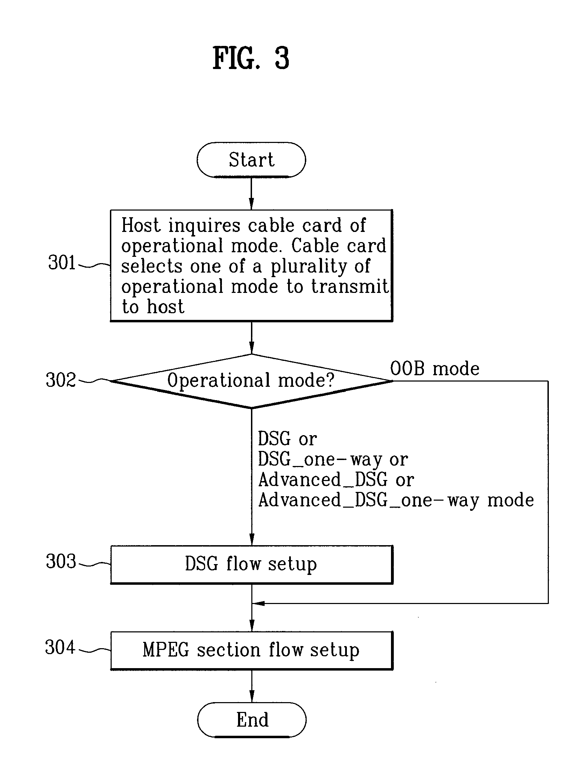

FIG. 3 is a flowchart of a method of setting the operational mode and the flow shown in FIG. 2.

Referring to FIG. 3, after the cable card has opened the ESC resource, the host inquires the cable card of the preferred operational mode. The cable card selects one of a plurality of operational modes and then transmits the selected operational mode to the host. Thus, a final operational mode is set (S301).

For instance, the cable card selects one of OOB, DSG, DSG_one-way, Advanced_DSG_mode and Advanced_DSG_one-way_mode as a factor of Set_DSG_mode( ) APDU and then transmits the selected factor to the host.

In this case, a flow setup varies according to the operational mode set in the step S301. So, it is decided in a step S302 whether the operational mode is the OOB mode or the DSG associated mode. And, the process goes to a step S303 or a step S304 according to a result of the decision made in the step S302.

The step S303 is a step that is executed in case that the operational mode is set to the DSG mode. The host transmits new_flow_req(DSG) APDU to the cable card. The cable card then sets up a DSG flow by responding with new_flow_cnf(DSG, 0x00) APDU.

And, the step S304 is a step that is executed in case that the DSG flow is set up in the step S303 or that the operational mode is set to the OOB mode in the step S302.

In particular, in the step S304, the host transmits new_flow_req(MPEG_SECTION) APDU to the cable card. The cable card then sets up an MPEG section flow by responding with new_flow_cnf(MPEG_SECTION, 0x00) APDU. Namely, if the operational mode is set to the OOB mode in the step S302, a procedure of the step S303 is omitted. And, the MPEG section flow is immediately set up.

Meanwhile, the present invention sets the OOB mode to a default operational mode. This is because the cable card may be unable to perform the above explained operational mode setting process due to a network problem and the like or because of a possibility that the cable card may communicated with the host that is not provided with the DOCSIS modem.

In the above-explained embodiment of the present invention, the descrambling module is provided to the cable card that is detachably assembled to the host. In this case, a broadcast signal from a broadcasting station(or headend) is descrambled via the descrambling module of the cable card and the descrambled signal is provided to a user.

Alternatively, a descrambling module is provided within a host without a cable card and a broadcast signal from a broadcasting station is descrambled by the descrambling module within the host to be provided to a user. In this case, the descrambling module can be configured to be downloaded from the broadcasting station or the like. In particular, the descrambling module downloaded from the broadcasting station or the like can be differently configured in a manner of being stored in a prescribed memory within the host.

As an example of a method of downloading the descrambling module, a CA(conditional access) image is automatically downloaded from the broadcasting station if a security processor built in the host accesses a network.

Yet, it is apparent that this configurational difference does not change the scope of the appended claims and their equivalents.

Accordingly, the present invention provides the following effects or advantages.

First of all, an operational mode is quickly set to decide whether to use an OOB QPSK modem or a DOCSIS modem for communications between a host, cable card and headend, whereby operations of various associated protocols for communications on a cable network become faster and more accurate.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A broadcast receiver comprising:
a cable card transmitting an operational mode; and
a host receiving and setting the operational mode from the cable card, the host establishing an extended channel communication flow according to a data type to communicate with the set operational mode, the host exchanging corresponding data with the cable card via the established flow.

2. The broadcast receiver of claim 1, wherein the cable card transmits the operational mode decided through communications with a headend to the host.

3. The broadcast receiver of claim 1, wherein the host makes a request for the operational mode to the cable card and then receives the operational mode from the cable card.

4. The broadcast receiver of claim 1, wherein the operational mode comprises either an OOB mode using an OOB modem or a DSG associated mode using a DOCSIS modem.

5. The broadcast receiver of claim 4, wherein if the operational mode is set to the DSG associated mode, the host establishes a DSG flow and then establishes at least one selected from the group consisting of an MPEG section flow, an IP unicast flow and an IP multicast flow.

6. The broadcast receiver of claim 4, wherein the DSG associated mode comprises at least one selected from the group consisting of DSG, DSG_one-way, Advanced_DSG_mode and Advanced_DSG_one-way_mode.

7. The broadcast receiver of claim 4, wherein if the operational mode is set to the OOB mode, the host establishes an MPEG section flow.

8. The broadcast receiver of claim 1, wherein the cable card is detachably loadable in the host.

9. The broadcast receiver of claim 1, wherein the cable card comprises a single stream card capable of processing one stream only.

10. The broadcast receiver of claim 1, wherein the cable card comprises a multi-stream card capable of processing a plurality of streams simultaneously.

11. An interfacing method comprising:
a step (a) of setting an operational mode received from a cable card in a host;
a step (b) of establishing an extended channel communication flow according to a data type to communicate with the set operational mode; and
a step (c) of exchanging corresponding data between the cable card and the host via the established flow.

12. The interfacing method of claim 11, wherein the operational mode in the step (a) is decided by the cable card through communications with a headend.

13. The interfacing method of claim 11, wherein the operational mode comprises either an OOB mode using an OOB modem or a DSG associated mode using a DOCSIS modem.

14. The interfacing method of claim 13, wherein in the step (b), if the operational mode is set to a DSG associated mode, at least one selected from the group consisting of an MPEG section flow, an IP unicast flow and an IP multicast flow is established.

15. The interfacing method of claim 13, wherein in the step (b), if the operational mode is set to the OOB mode, an MPEG section flow is established.

16. An interfacing method comprising:
a step (a) of setting an operational mode received from a cable card in a host;
a step (b) of if the set operational mode is a DSG associated mode using a DOCSIS modem, establishing a DSG flow;
a step (c) of if the DSG flow is established, establishing at least one selected from the group consisting of an MPEG section flow, an IP unicast flow and an IP multicast flow; and
a step (d) of exchanging corresponding data between the cable card and the host via the established flow.

17. The interfacing method of claim 16, wherein the DSG associated mode comprises at least one selected from the group consisting of DSG, DSG_one-way, Advanced_DSG_mode and Advanced_DSG_one-way_mode.

18. The interfacing method of claim 16, wherein the operational mode in the step (a) is decided by the cable card through communications with a headend.

19. An interfacing method comprising:
a step (a) of setting an operational mode received from a cable card in a host;
a step (b) of if the set operational mode is an OOB mode using an OOB modem, establishing an MPEG section flow; and
a step (d) of exchanging corresponding data between the cable card and the host via the established MPEG section flow.

20. The interfacing method of claim 19, wherein the operational mode in the step (a) is decided by the cable card through communications with a headend.
